Europäisches Patentamt

European Patent Office

Office européen des brevets

(19)

(11) Publication number: **0 342 614**
**A1**

## EUROPEAN PATENT APPLICATION

(21) Application number: 89108791.8

(22) Date of filing: 16.05.89

(51) Int. Cl.4: **H02H 7/22 , H02H 11/00**

(30) Priority: 17.05.88 IT 2060888

(43) Date of publication of application:
**23.11.89 Bulletin 89/47**

(84) Designated Contracting States:
**AT BE CH DE ES FR GB GR IT LI LU NL SE**

(71) Applicant: **ELECTRICAL SAFETY COMPANY
S.r.l.
Frazione Borasca
I-20071 Casalpusterlengo (Milano)(IT)**

(72) Inventor: **Ossola, Roberto
Via Stelvio, 2
I-20071 Casalpusterlengo(Milano)(IT)**
Inventor: **Gilardoni, Sergio
Via Defendente, 17
I-20075 Lodi (Milano)(IT)**
Inventor: **Ossola, Costanzo
Via Felice Cavallotti, 118
I-20071 Casalpusterlengo(Milano)(IT)**

(74) Representative: **Faggioni, Giovanmaria, Dr. et
al
Fumero-Studio Consulenza Brevetti
Widenmayerstrasse 4/I
D-8000 München 22(DE)**

(54) Safety power supply system for movable electric machines.

(57) The invention concerns a safety power supply system for movable electric machines, also not provided with an earth conductor, comprising at least one power unit, a main general switch, and a flexible cable or conductor connected to said switch and extending externally to the machine as far as a connection point to the supply mains. According to the invention, the flexible conductor houses a high-voltage main line, to feed said power unit, and a low-voltage offset line; on the side of the electric machine, the main line is directly connected to the power unit and the offset line is connected to said main switch and controlled by this latter; on the side of the connection point to the mains, said conductor is instead connected to a control device housing a relay switch to disconnect the main feeding line, a voltage transformer connected to said main line at a point upstream of said relay switch and feeding said offset line, and means to feed and/or control the tripping circuit of said relay switch, under the control of said main switch acting on the offset line.

Fig. 1

## SAFETY POWER SUPPLY SYSTEM FOR MOVABLE ELECTRIC MACHINES

The object of the present invention is a system to control the power supply of electric machines, particularly movable or portable electric machines, connected to the supply mains by way of a flexible conductor, said system being apt to guarantee conditions of maximum safety against accidental electric discharges when the machine is in non-working conditions.

Different safety devices for electric machines are widely known in technique, preventing the users from being subjected to even very dangerous accidental electric discharges. Usually, all such devices are based on an electronic circuit, which is apt to detect any current leakages to earth and/or any differential currents and which sends, on the basis of said detection, a signal to switch off the circuit feeding the machine. As known, devices of this type are very complicated and costly.

Such devices are moreover far too sensitive, so that it is practically impossible to use them on machines working in difficult environmental conditions, especially in the presence of high dampness -like outdoor machines, as building yard machines and/or gardening machines, or household washing machines - wherein, due to humidity or to water forming a bridge between the circuit phases, said safety device ends up by constantly switching off.

There are also known to be safety devices, the essential object of which is to protect the feeding cable. Devices of this type are described for example in the publications GB-A-731.492, GB-A-239.521, DE-A-1.812.737. These publications illustrate feeding cables which comprise a main, central, feeding conductor, surrounded by a network of sub-conductors, associated to an electronic safety circuit. When the cable undergoes damage, there is a break or short circuit in the network of sub-conductors, being detected by the electronic circuit which cuts off the switch on the main feeding circuit. The function of these known devices is however strictly confined to the protection of the feeding cable and by no means solves the problem lying at the basis of the invention; in particular, this system does not provide any kind of safety in the event of current leakages occurring in correspondence of the electric machine and/or of the respective control switch.

Also the publication FR-A-2.576.720 describes a safety system, which is however meant to solve a very particular and limited problem, namely to guarantee the absence of current in an extension cable - when this latter is not connected to any cables feeding electric machines - by means of a control circuit making use of the earth conductor of the cable itself.

The invention starts instead from the consideration that, in machines of the above mentioned type - particularly in electrical machines working in the presence of water - it is extremely difficult, if not impossible, to realize a safety device which is at the same time really efficient, but not too sensitive. These two requisites are in fact diametrically opposite and thus substantially incompatible.

On the other hand it should also be considered that, when the user employs a machine of this type, he is quite aware of the risks of electric discharges in a damp environment, whereby he is also careful and in a position to take the due precautions. Whereas, when the machine is temporarily not working - and the risk of electric discharges nonetheless exists, for the simple fact that the cable feeding the machine is connected to the mains - the user is inclined to disregard said risk, to which he is thus more easily subject.

In fact, said electric machines, even while they are not operating, can have their conductive parts (cables or metal parts) live, due for example to bad inner insulation. There are hence frequent cases of people being struck by electric discharges - sometimes even deadly - for the mere casual contact with the external part of the machine, also when this latter is not working.

Furthermore, electric machines - and particularly movable machines with an external flexible electric cable for connection to the mains -usually have a switch which cuts off only one of the phases of the feeding line; whereby, even when they are not working, a certain electric potential is always present therein. Moreover, the breakages or wear, to which some delicate machine parts are more easily subject, make them extremely dangerous - especially, as said, in building yards, gardening activities or household uses - also when they are not working.

That being stated, the problem at the basis of the invention is to obtain a safety device, apt to provide an absolute safety and to protect the user against current leakages and electric discharges solely and simply when the electric machine is not working, though its feeding cable is connected to the mains.

More precisely, the main object of the present invention is to realize a power supply system for electric machines, apt to prevent the risks of electric discharges in said machines while they are not working, by totally and automatically removing the current from all their parts at the very moment in which they are disconnected, or whenever the flexible feeding cable may be accidentally switched off or cut off.

Another object of the invention is to realize such a device in a simple and very economic manner, so that it may be generally applied on any electric machine with a practically negligible outlay.

These and other results are obtained - in a movable electric machine of the aforementioned type, also not provided with an earth conductor, comprising at least one power unit, a main general switch, and a flexible cable or conductor which branches off from said main switch and which extends externally to the machine as far as a connection point to the supply mains - due to the fact that

- said flexible conductor houses a high-voltage main line, to feed said power unit, and a low-voltage offset line,
- on the side of the electric machine, said main line is directly connected to the power unit, and said offset line is connected to said main switch and controlled by this latter,
- on the side of the connection point to the mains, said conductor is connected to a control device comprising: at least one relay switch to disconnect the main feeding line; at least one voltage transformer, connected to said main line at a point upstream of said switch and feeding said offset line; and means to feed and/or control the tripping circuit of said relay switch, through said low-voltage offset line.

Further characteristics and advantages of the power supply system according to the invention will anyhow be more evident from the following detailed description of some embodiments thereof, given by way of example and illustrated on the accompanying drawings, in which:

Fig. 1 shows a first tentative wiring diagram, in its simplest form;

Fig. 2 shows a different embodiment, associated to a general rotary-type switch, with timer; and

Fig. 3 shows a further embodiment, comprising a supplementary electronic safety circuit.

As shown, the system essentially makes use of two component elements, and precisely a main general switch A and a device B of connection to the mains.

The switch A is positioned on the machine M and is connected to the device B by way of a flexible cable C. This cable houses at least four conductors 1, 2, $3'$ and $3''$, of which, the conductors 1 and 2 form the high-voltage main line supplying the power unit U of the machine M, while the conductors $3'$ and $3''$ form a low-voltage offset line the function of which is better described hereinafter.

The flexible cable C extends as far as the device B of connection to the mains, which consists of a box-like element 5 comprising, for example, a plug 6 for insertion into a socket of the mains, shown by 7.

The device B - preferably formed of a sealed box-like element -houses a relay R, a transformer T and, possibly, a led warning light L. The input of the transformer T is directly connected to the plug 6, namely to the high voltage of the mains, while the output feeds the low-voltage circuit. This circuit only comprises the two conductors 3 and 4, which supply current to the low-voltage coil R1 controlling the relay R, and the extensions $3'$ and $3''$ of said conductor 3, which end into the switch A.

Always inside the box of the device B, the high-voltage line passes through the off-on contacts of a switch 8 controlled by the relay R, the number of such contacts being preferably equal to the number of phases of this line; the drawing shows only two phases, but it could also be a three-phase circuit. Each of these phases is hence disconnected when the switch of the relay R is off.

The working of this system is extremely simple: the relay R is normally off, whereby the high voltage of the supply mains is present only inside the box-like body 5, between the plug 6 and the switch 8 of the relay R. The low voltage at the output of the transformer T - for example, a voltage of 6, 12 or 18 V - is present in the offset line and in the contacts of the main general switch A, but does not circulate in the coil controlling the relay R since this switch A is off. In these conditions, as can easily be seen, a user who might inadvertently touch any broken or worn parts of the cable C, or any not perfectly insulated parts of the machine M, does not undergo any electric discharges, since no tension is present in the conductors 1, 2, and the tension present in the conductors $3'$, $3''$, is so low as to be of no danger at all, nor of any trouble.

When wishing to start the machine, the switch A is switched on in usual manner: a low-voltage current then circulates in the offset line 3, $3'$, $3''$, 4, and through the coil R1 of the relay R, which latter, thus energized, switches on the respective switch 8: a high-voltage current then starts to circulate in the main feeding line 1, 2, and thus in the power unit U of the machine M. The switch A can be of the type with two positions, on-off, or of the pressure type, normally off.

According to a different embodiment (not shown), it is possible to provide on the machine both a switch A acting on the low-voltage circuit, and a further power switch acting on the high-voltage circuit, both these switches being operated by a single push button. Also in this case the switch can be of the two-position type - on-off - or of the pressure type, normally off.

A double switch of this type, with pressure push button, is particularly suited for controlling worktools - for example garden tools as lawn mowers or electrical saws - wherein the tool works as long as the operator keeps the push button pressed, but at the very moment in which the operator drops the tool, the push button switches off at once.

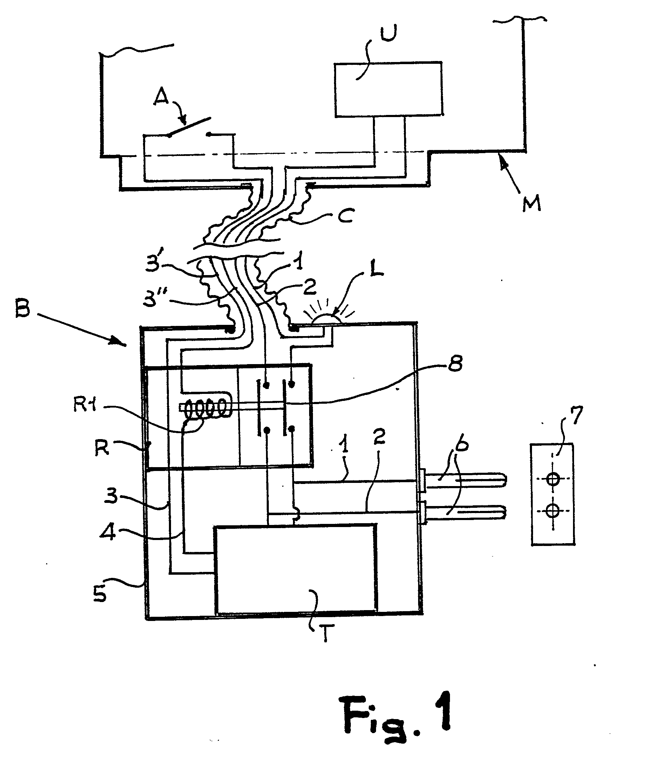

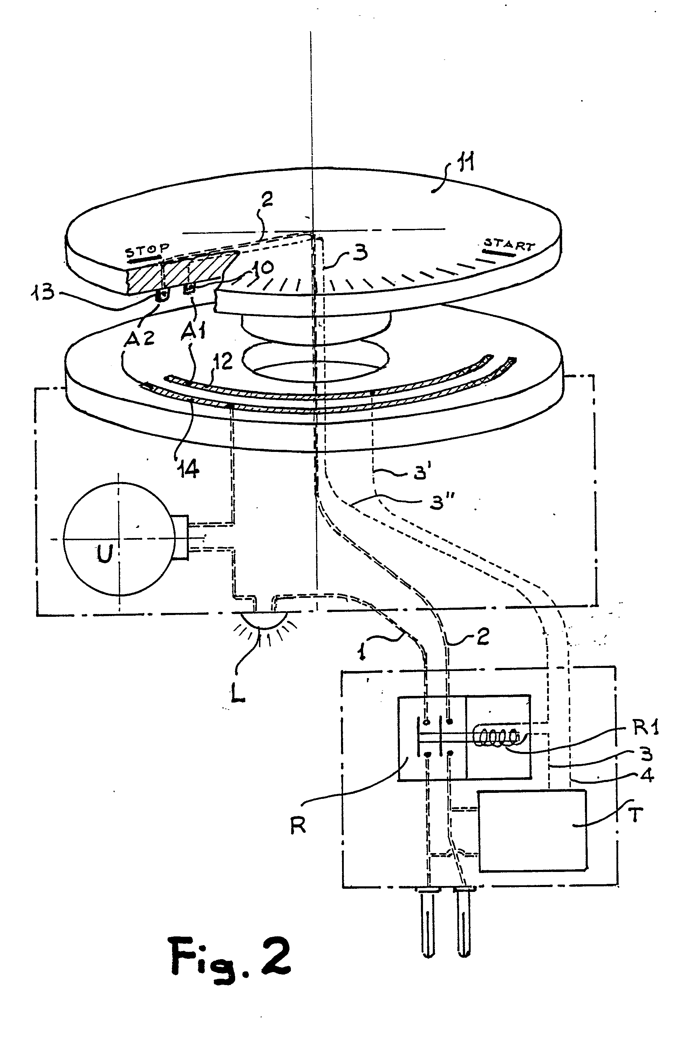

A further embodiment with double switch is shown in figure 2 and it differs from that of figure 1 for the structure of the general switch of the machine M. In fact, the portion A1 corresponds to the switch A of figure 1 and acts on the low-voltage circuit (marked in the drawing by dotted lines) which passes through the movable contact 10, connected to the rotary control handle 11, and through the fixed contact strip 12, shaped as a circle arc and having its centre on the axis of the handle 11. Whereas, the portion A2 of the switch acts on at least one phase of the high-voltage circuit (marked by double dashes) which passes through the movable contact 13, in turn connected to the handle 11, and through the fixed contact strip 14, circular and concentric in respect of the strip 12.

The embodiment of figure 2 is used whenever the simple high-voltage feeding of the power unit is not sufficient, but it is necessary to control the machine through a timer, a voltage regulator or commutator with several positions for voltage regulation, or the like; this happens, for example, when operating certain machines with differentiated cycles, or more simply, washing machines or dishwashers. In such cases, the embodiment of figure 2 makes it possible to automatically disconnect the machine from electric tension as soon as the timing unit moves the switch to a waiting position, the connection to the mains being re-established as soon as the working cycle starts again.

Also the embodiment of figure 2 provides for a warning light - for instance in the form of a led, associated in this case to the body of the machine M - which lights up when current is passing through the main circuit; this always allows to check that the machine is being fed.

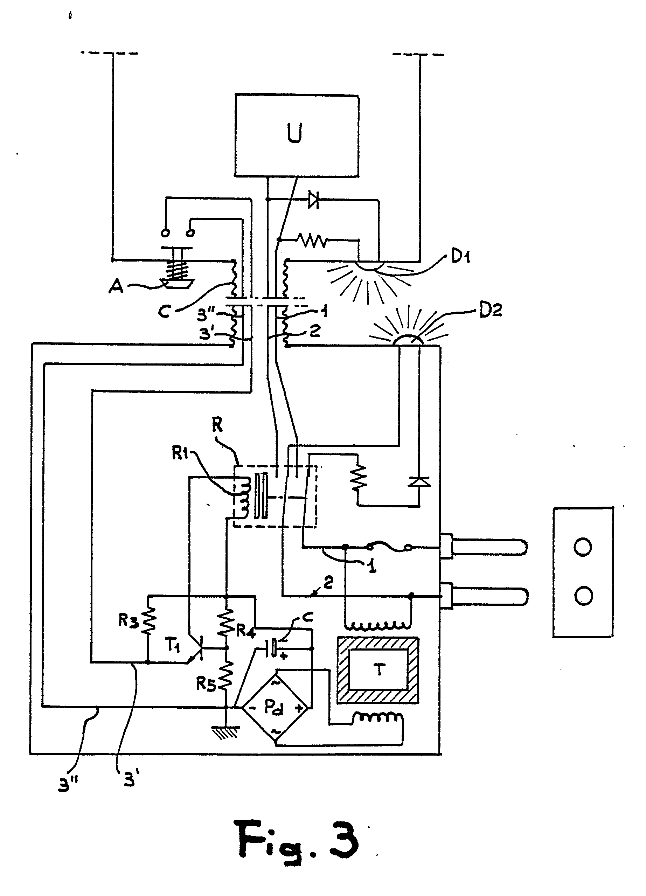

In the embodiment of figure 3 - which corresponds to the diagram of figure 1 - to the main general switch A there is associated an electronic circuit which constitutes a supplementary safety device. In this embodiment, the relay R is in fact fed through a feeder stage -comprising the transformer T, the rectifier Pd and the capacitor C - and through a successive pilot stage, in which a voltage divider R4, R5, connected to the base of the transistor T1, fixes a working point and makes the circuit stable. A resistance R3, connected between the sender and the positive pole of the voltage of the rectifier, keeps - when the switch A is switched off - the potential of the sender above the working point, so that the transistor T1 is cut off.

As the switch A is switched on, the potential of the sender of T1 goes to earth, that is, below the working point of the transistor T1, which thus becomes conductive. A current then passes through the coil R1 of the relay R, causing the tripping of the relay switch and thus allowing the high-voltage feeding of the power unit U.

The main advantage of this embodiment derives from the fact that the presence of water on the contacts of the switch A - which may occur if the machine is accidentally sprayed or even dropped in water - though allowing the passage of a weak current through R3, is however not sufficient to bring the transistor T1 in saturation and is thus not in a position to cause the accidental tripping of the relay R: the high-voltage current is therefore not able to pass through the conductors 1, 2, nor to thus create any risks of electric discharges towards a user who might come in contact with the body of the machine M.

As can hence be understood, the embodiment of figure 3 has the advantage of positively preventing any risks of electric discharges connected with the accidental dropping in water of the machine, or its simple wetting; provided, of course, that the switch A is in an off position.

The embodiment of figure 3 also comprises two luminous signals indicating the working state of the machine: the signal D1 is applied on the body of the machine M and is fed through the conductors 1 and 2; it therefore indicates, like the warning light L of figure 1, that the power unit U is high-voltage fed. The signal D2 is instead tied to the use of a double-contact relay R: in one position the switch of the relay R feeds the unit U, while in the other position - which is that shown in figure 3 - it instead allows feeding the signal D2, which thus indicates that the machine M is not being fed and no part thereof is live.

The heretofore described embodiment can obviously be used also with a general switch and with a wiring diagram as that of figure 2. This application is within easy reach of a technician skilled in the art and is hence not described herein.

It is anyhow understood that the invention is not limited to the particular embodiments illustrated, but that there may be various other embodiments differing therefrom - particularly for what concerns the structure of the switch on the low-voltage circuit, or anyhow the control system of the relay R - these embodiments being all within reach of an expert in the art and thus falling in the protection scope of the invention itself.

## Claims

1) Safety power supply system for movable electric machines, also not provided with an earth conductor, comprising at least one power unit, a main general switch, and a flexible cable or conductor connected to said switch and extending externally to the machine as far as a connection point to the supply mains, characterized in that
- said flexible conductor houses a high-voltage main line, to feed said power unit, and a low-voltage offset line,
- on the side of the electric machine, said main line is directly connected to the power unit, and said offset line is connected to said main switch and controlled by this latter,
- on the side of the connection point to the mains, said conductor is connected to a control device comprising: at least one relay switch to disconnect the main feeding line; at least one voltage transformer, connected to said main line at a point upstream of said relay switch and feeding said offset line; and means to feed and/or control the tripping circuit of said relay switch, through said low-voltage offset line.

2) Power supply system as in claim 1), characterized in that said means to feed the tripping circuit of said relay switch merely consist of said main general switch.

3) Power supply system as in claim 1), characterized in that said means to feed the tripping circuit of said relay switch comprise an electronic circuit, piloted by the voltage signal present on said offset line and apt to take up a conductive condition and, respectively, a condition cutting off the current from said tripping circuit, the cutoff condition being established when the voltage signal on the offset line is substantially below maximum.

4) Power supply system as in claim 1) or 2), characterized in that said means to feed the tripping circuit of said relay switch comprise an electronic control circuit, consisting of a low-voltage and D.C. feeding stage, and a transistor pilot stage, with working point defined by a voltage divider, the conductive state of said pilot stage being established only with substantially no load resistance on the output of the sender, that is, on switching on of said main switch.

5) Power supply system as in claim 1), wherein said relay switch comprises as many off and on contacts as the phases of the main feeding line.

6) Power supply system as in claim 1), wherein said relay switch consists of a double-contact relay, one position feeding the high-voltage line of the electric machine and the other position feeding a signalling device indicating its working state.

7) Power supply system as in any one of the previous claims, wherein a power switch acting on the high-voltage line is combined to said main general switch acting on the low-voltage line.

8) Power supply system as in claim 7), wherein said main general switch and said power switch are controlled by a single push button.

9) Power supply system as in claim 7), wherein said main general switch and/or said power switch are of the type with two positions, on and respectively off.

10) Power supply system as in claim 7), wherein said main general switch and/or said power switch are of the pressure type, normally off.

**Fig. 1**

**Fig. 2**

Fig. 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| D,Y | GB-A-731492 (CALOR-EMAG)<br>* page 1, lines 67 - 79 *<br>* page 3, lines 35 - 52 *<br>--- | 1-10 | H02H7/22<br>H02H11/00 |
| D,Y | FR-A-2576720 (FAYE)<br>* page 3, line 27 - page 8, line 17 *<br>--- | 1-10 | |
| D,A | DE-A-1812737 (WOLF-GERÄTE)<br>* page 6 *<br>--- | 1 | |
| D,A | GB-A-239521 (JOSEF SEJVL)<br>* page 1, lines 45 - 78 *<br>----- | 1 | |

TECHNICAL FIELDS
SEARCHED (Int. Cl.4 )

H01R
H02H
H01B

The present search report has been drawn up for all claims

| Place of search | Date of completion of the search | Examiner |
|---|---|---|
| THE HAGUE | 14 JULY 1989 | LIBBERECHT L.A. |

EPO FORM 1503 03.82 (P0401)